# EUROPEAN PATENT SPECIFICATION

(11) **EP 3 872 740 B1**
(45) Date of publication and mention of the grant of the patent: **28.02.2024**
(21) Application number: 18944377.3
(22) Date of filing: 27.12.2018
(51) Int. Cl.: G06Q 10/0631, G06Q 50/02, G05D 1/02, A01D 34/00, G06Q 10/101

(54) **ASSISTANCE DEVICE AND ASSISTANCE METHOD**
ASSISTENZVORRICHTUNG UND ASSISTENZVERFAHREN
DISPOSITIF D'AIDE ET PROCÉDÉ D'AIDE

(43) Date of publication of application: 01.09.2021
(73) Proprietor: HONDA MOTOR CO., LTD., Minato-ku Tokyo 107-8556 (JP)
(72) Inventor: DOBASHI, Manabu, Wako-shi, Saitama 351-0193 (JP); KONO, Kaori, Tokyo 107-8556 (JP)
(74) Representative: Beder, Jens
(86) International application number: PCT/JP2018/048168
(87) International publication number: WO 2020/136812

(56) References cited:
- EP-A1- 2 926 642
- EP-A1- 3 104 245
- WO-A1-2018/142791
- JP-A- 2015 205 167
- JP-A- 2017 211 750
- US-A1- 2012 310 532
- US-A1- 2017 312 916

## Description

### TECHNICAL FIELD

The present invention relates to an assistance apparatus and an assistance method.

### BACKGROUND ART

In the landscaping industry and the like, there are cases where a plurality of workers perform work such as lawn mowing on a team. When a plurality of workers perform work using different types of work machines, the workers need to corporate in terms of areas to which they are assigned for performing work, the order in which they perform work, and the like. Japanese Patent Laid-Open No. 2016-12243 proposes a system that enables workers to share the positions thereof and the progress of work.

US 2017/312916 A1 discloses a system comprising a plurality of work machines. In order to improve the performance, a work machines may request additional work machines such that the requesting and the additional work machines may operate in proximity to each other. EP 3 104 245 A1, US 2012/310532 A1, EP 2 926 642 A1 and WO 2018/142791 A1 disclose further examples of work machines.

### SUMMARY OF INVENTION

### TECHNICAL PROBLEM

In the system described in Japanese Patent Laid-Open No. 2016-12243, the coordination of workers is left to their voluntary behaviors. Therefore, there has been room for improvement in the cooperation between workers. Some aspects of the present invention aim to provide a technique for improving the cooperation between a plurality of workers.

### SOLUTION TO PROBLEM

In view of the above issue, provided is an assistance apparatus and method for assisting work according to claim 1 and 7.

### ADVANTAGEOUS EFFECTS OF INVENTION

The cooperation between a plurality of workers improves using the above-described means.

Other features and advantages of the present invention will be apparent from the following description taken in conjunction with the accompanying drawings as defined by the appended claims. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention, which is defined by the appended claims.
FIG. 1 is a schematic diagram illustrating an environment to which some embodiments of the present invention are applied.
FIG. 2 is a block diagram illustrating a configuration example of an assistance system according to some embodiments of the present invention.
FIG. 3 is a block diagram illustrating a configuration example of a vehicle assistance apparatus according to some embodiments of the present invention.
FIG. 4 is a block diagram illustrating a configuration example of a general assistance apparatus according to some embodiments of the present invention.
FIG. 5 is a block diagram illustrating a configuration example of a robot assistance apparatus according to some embodiments of the present invention.
FIG. 6 is a block diagram illustrating a configuration example of an assistance server according to some embodiments of the present invention.
FIG. 7 is a flowchart illustrating of an operation example of an assistance system according to some embodiments of the present invention.

### DESCRIPTION OF EMBODIMENTS

Embodiments of the present invention will be described below with reference to the accompanying drawings. Some embodiments of the present invention relate to a technique for assisting work that is performed using a plurality of work machines that include a travelling work machine. In the following examples, landscaping work is handled as an example of work. Landscaping work includes lawn mowing and blowing of reaped lawn grass. Here, landscaping work is handled as an example of work, but there is no limitation to landscaping work, and the present invention may also be applied to agricultural work, snow-plowing work, and the like, and, in this case, examples of the travelling work machine include a cultivator and a snowplow, and there is no limitation to a lawnmower.

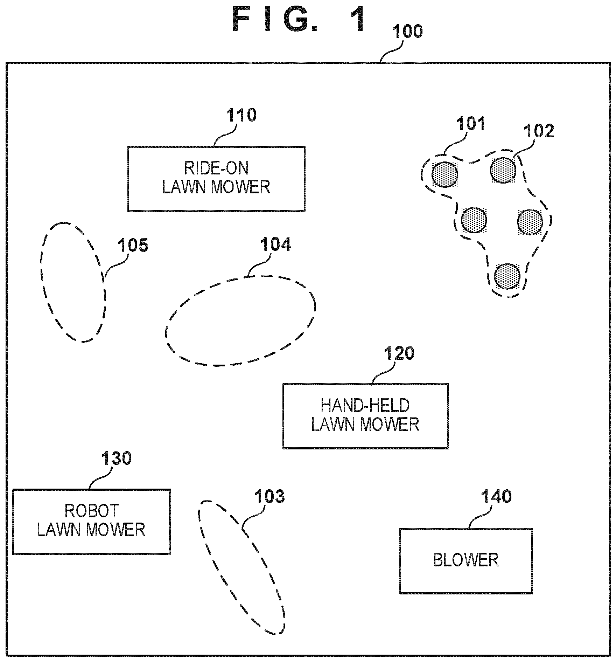

An environment in which some embodiments of the present invention are applied will be described with reference to FIG. 1. In this environment, landscaping work is performed in a work area 100 using a plurality of types of work machines that include a ride-on lawn mower 110, a hand-held lawn mower 120, a robot lawn mower 130, and a blower 140. The work area 100 is set in advance.

The ride-on lawn mower 110 is a work machine for a worker to ride on and perform lawn mowing. The ride-on lawn mower 110 is an example of a work vehicle. The hand-held lawn mower 120 is a work machine for a worker to perform lawn mowing while walking. The robot lawn mower 130 is a work machine that can perform work automatically (i.e., without being operated by the worker). The robot lawn mower 130 may be capable of performing work in accordance with a remote operation performed by the worker. The blower 140 is a work machine for the worker to perform blowing of lawn grass while walking. FIG. 1 shows one work machine for each type, but there may be a plurality of work machines of the same type. In addition, some types of work machines (for example, the robot lawn mower 130 and the blower 140) do not need to be used for work, depending on the work content.

The work area 100 includes an area in which a work machine other than the ride-on lawn mower 110 needs to perform work. Specifically, the work area 100 includes an area 101 (area in which work cannot be performed) that the ride-on lawn mower 110 cannot enter due to the presence of an obstacle such as a tree 102, an area 105 (area in which it is difficult to perform work) in which it is difficult for the ride-on lawn mower 110 to travel due to the state of ground with lawn, for example, the ground being muddy due to rain or the like, and an area 103 (area unsuitable for work) that is steeply inclined and in which work that is performed by the ride-on lawn mower 110 involves risk. The positions of these areas 101 and 103 are determined in advance, and the position of the area 105 is determined while work is being performed. In addition, the work area 100 includes an area 104 in which blowing is performed by the blower 140 when reaped lawn grass is gathered. The position of this area is determined in accordance with a work situation.

When an area (for example, the area 101, 103, or 104) in which another work machine needs to perform work is specified while the ride-on lawn mower 110 is performing work, an assistance system to be described later requests that the other work machine perform work in the area. Upon receiving this request, the other work machine, namely the hand-held lawn mower 120, the robot lawn mower 130, or the blower 140 performs work in this area.

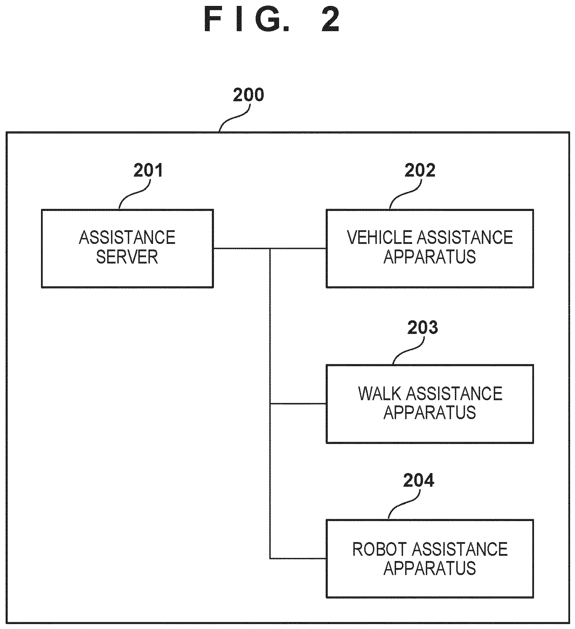

A configuration example of an assistance system 200 according to some embodiments of the present invention will be described with reference to FIG. 2. The assistance system 200 includes an assistance server 201, a vehicle assistance apparatus 202, a walk assistance apparatus 203, and a robot assistance apparatus 204. The assistance server 201 performs overall control of the assistance system 200. Assistance apparatuses such as the vehicle assistance apparatus 202, the walk assistance apparatus 203 and the robot assistance apparatus 204 are allocated respectively for work machines. Specifically, the vehicle assistance apparatus 202 is an apparatus allocated for a work vehicle such as the ride-on lawn mower 110. The vehicle assistance apparatus 202 may be incorporated in the ride-on lawn mower 110, or may also be held by the worker of the ride-on lawn mower 110. The walk assistance apparatus 203 is an apparatus allocated for a work machine used by a walking worker, such as the hand-held lawn mower 120 and the blower 140. The walk assistance apparatus 203 may be incorporated in the lawn mower 120 or the blower 140, or may also be held by the worker of the lawn mower 120 or the blower 140. The robot assistance apparatus 204 is an apparatus allocated for the robot lawn mower 130. The robot assistance apparatus 204 may be incorporated in the robot lawn mower 130, or may also be attached to the robot lawn mower 130 as a separate apparatus.

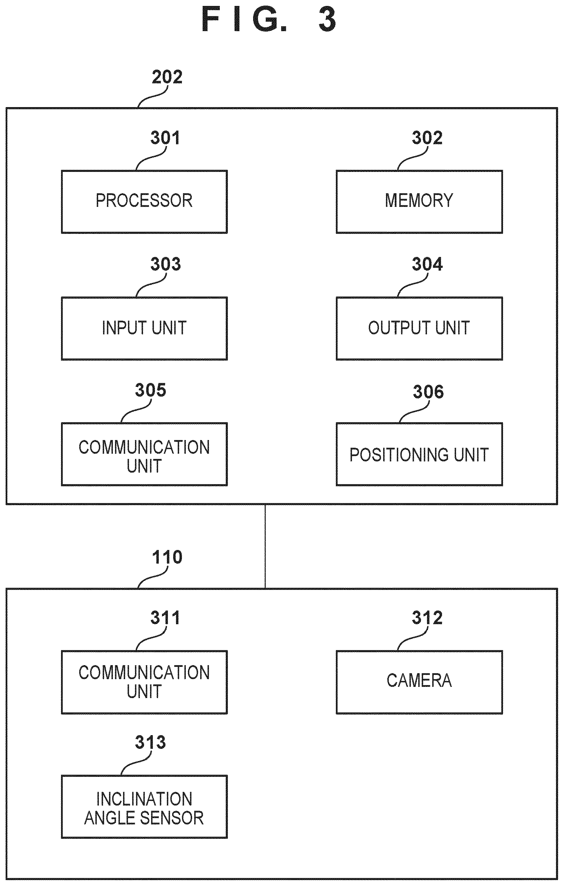

A configuration example of the vehicle assistance apparatus 202 and the ride-on lawn mower 110 according to some embodiments of the present invention will be described with reference to FIG. 3. The configuration of the ride-on lawn mower 110 will be described mainly in relation to operations of the assistance system 200. An existing configuration may be used as a configuration specific to the ride-on lawn mower 110 (a blade for lawn mowing, a motor, or the like), and thus a description thereof is omitted.

The vehicle assistance apparatus 202 includes a processor 301, a memory 302, an input unit 303, an output unit 304, a communication unit 305, and a positioning unit 306. The processor 301 performs overall processing of the vehicle assistance apparatus 202. Specific processing content will be described later. The processor 301 may be a single processor, or may also be a plurality of separate processors. The processor 301 functions as a CPU or a GPU, for example. The memory 302 stores programs and data used for processing performed by the vehicle assistance apparatus 202. The memory 302 is constituted by a ROM, a RAM, an SDD, and the like.

The input unit 303 is an apparatus for receiving input from the worker of the ride-on lawn mower 110, and is constituted by push buttons, a touch pad, a keypad, and the like. The output unit 304 is an apparatus for outputting information to the worker of the ride-on lawn mower 110, and is constituted by a display, a speaker, and the like. The input unit 303 and the output unit 304 may also be constituted by a touch screen. Alternatively, the output unit 304 may also be configured using AR (Augmented Reality).

The communication unit 305 is an apparatus for the vehicle assistance apparatus 202 to communicate with another apparatus (for example, the ride-on lawn mower 110 and the assistance server 201). If the communication unit 305 performs wired communication, the communication unit 305 is constituted by a communication port, a network card, and the like. If the communication unit 305 performs wireless communication, the communication unit 305 is constituted by an antenna and a baseband processing circuit. The positioning unit 306 is an apparatus for measuring the geographical location of the vehicle assistance apparatus 202. The positioning unit 306 is constituted by a GPS (Global Positioning System) receiver, for example. The vehicle assistance apparatus 202 is held by the worker of the ride-on lawn mower 110, or incorporated in the vehicle assistance apparatus 202, and thus the geographical location of the vehicle assistance apparatus 202 can be regarded as the position of the ride-on lawn mower 110.

The ride-on lawn mower 110 includes a communication unit 311, a camera 312, and an inclination angle sensor 313 in addition to a configuration specific to the ride-on lawn mower 110. The communication unit 311 is an apparatus for communicating with the vehicle assistance apparatus 202. The camera 312 is a sensor for capturing the surroundings of the ride-on lawn mower 110. The camera 312 may be attached so as to capture an image on the front side of the ride-on lawn mower 110, or may also be attached so as to capture an image on a side or on the rearward side in addition to the front side. In addition, a camera 111 may be attached so as to capture images of the states of ground before and after the ride-on lawn mower 110 performs lawn mowing. The inclination angle sensor 313 is a sensor for measuring the inclination angle of ground on which the ride-on lawn mower 110 is placed. The ride-on lawn mower 110 may also include a slip detection apparatus.

If the vehicle assistance apparatus 202 is incorporated in the ride-on lawn mower 110, the communication unit 311 may be omitted. Instead of or in addition to the camera 312 being included in the ride-on lawn mower 110, the vehicle assistance apparatus 202 may include a camera. The vehicle assistance apparatus 202 is installed at a position where the camera of the vehicle assistance apparatus 202 can capture an image on the front side of the ride-on lawn mower 110 and the like when the ride-on lawn mower 110 is performing work. Similarly, instead of or in addition to the inclination angle sensor 313 being included in the ride-on lawn mower 110, the vehicle assistance apparatus 202 may also include an inclination angle sensor. In addition, instead of or in addition to the positioning unit 306 being included in the vehicle assistance apparatus 202, the ride-on lawn mower 110 may also include a positioning unit.

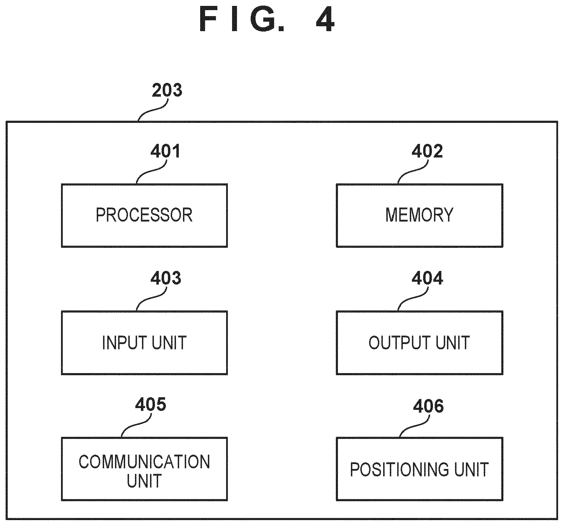

A configuration example of the walk assistance apparatus 203 according to some embodiments of the present invention will be described with reference to FIG. 4. The walk assistance apparatus 203 includes a processor 401, a memory 402, an input unit 403, an output unit 404, a communication unit 405, and a positioning unit 406. The configurations of the processor 401, the memory 402, the input unit 403, the output unit 404, the communication unit 405, and the positioning unit 406 may be respectively similar to the configurations of the processor 301, the memory 302, the input unit 303, the output unit 304, the communication unit 305, and the positioning unit 306 of the vehicle assistance apparatus 202, and thus a description thereof is omitted.

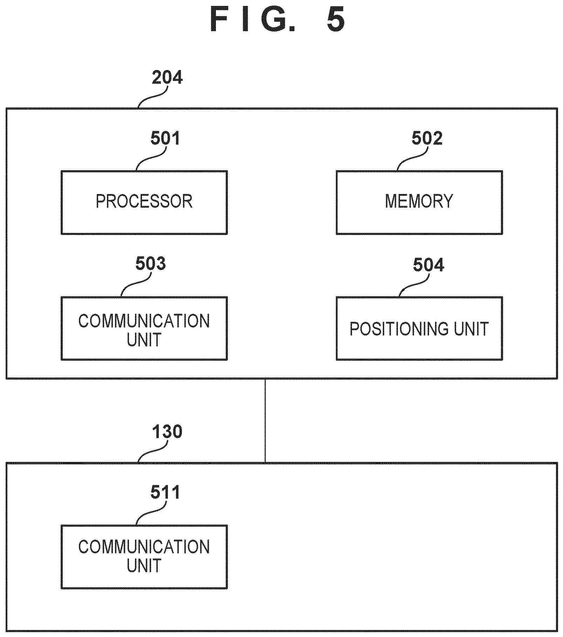

A configuration example of the robot assistance apparatus 204 and the robot lawn mower 130 according to some embodiments of the present invention will be described with reference to FIG. 5. The configuration of the robot lawn mower 130 will be described mainly in relation with operations of the assistance system 200. An existing configuration may be used as a configuration specific to the robot lawn mower 130 (a blade for lawn mowing, a drive apparatus, and the like), and thus a description thereof is omitted.

The robot assistance apparatus 204 includes a processor 501, a memory 502, a communication unit 503, and a positioning unit 504. The configurations of the processor 501, the memory 502, the communication unit 503, and the positioning unit 504 may be respectively similar to the configurations of the processor 301, the memory 302, the communication unit 305, and the positioning unit 306 of the vehicle assistance apparatus 202, and thus a description thereof is omitted.

The robot lawn mower 130 includes a communication unit 511 in addition to a configuration specific to the robot lawn mower 130. The communication unit 511 is an apparatus for communicating with the robot assistance apparatus 204. If the robot assistance apparatus 204 is incorporated in the robot lawn mower 130, the communication unit 511 can be omitted.

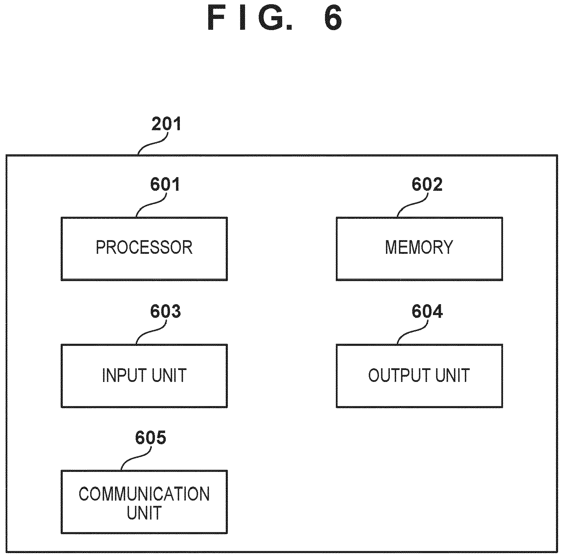

A configuration example of the assistance server 201 according to some embodiments of the present invention will be described with reference to FIG. 6. The assistance server 201 includes a processor 601, a memory 602, an input unit 603, an output unit 604, and a communication unit 605. The configurations of the processor 601, the memory 602, the input unit 603, the output unit 604, and the communication unit 605 may be respectively similar to the configurations of the processor 301, the memory 302, the input unit 303, the output unit 304, and the communication unit 305 of the vehicle assistance apparatus 202, and thus a description thereof is omitted.

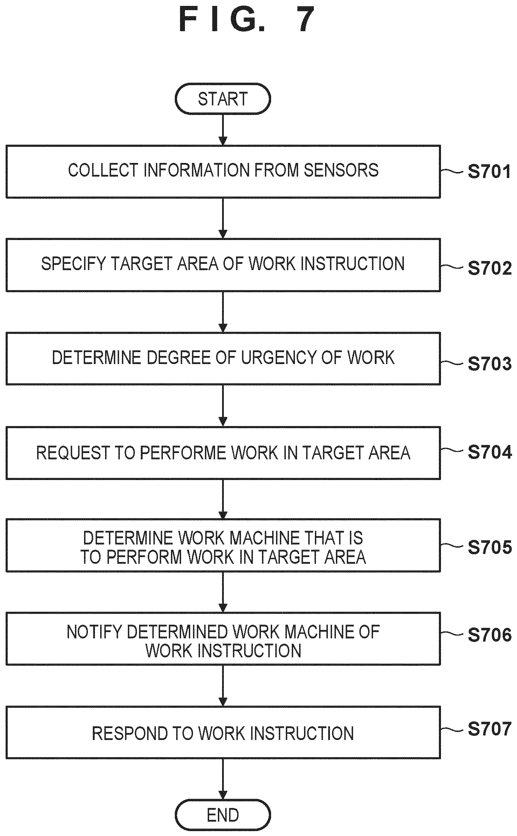

An operation example of the assistance system 200 will be described with reference to FIG. 7. Steps of a method to be described below are performed as a result of the processors of the apparatuses constituting the assistance system 200 (the assistance server 201, the vehicle assistance apparatus 202, the walk assistance apparatus 203, and the robot assistance apparatus 204) executing a computer program stored in the memories. Alternatively, some or all of the steps of the method to be described later may be executed by a dedicated circuit such as an ASIC (application specific integrated circuit).

In step S701, the vehicle assistance apparatus 202 collects information from sensors related to the ride-on lawn mower 110. The sensors related to the ride-on lawn mower 110 include the sensors mounted in the ride-on lawn mower 110 (the camera 312 and the inclination angle sensor 313) and the sensor (the positioning unit 306) mounted in the vehicle assistance apparatus 202 allocated for the ride-on lawn mower 110. Images of the surroundings of the ride-on lawn mower 110 are collected from the camera 312. The inclination angle of ground on which the ride-on lawn mower 110 is placed is collected from the inclination angle sensor 313. The geographical location of the ride-on lawn mower 110 is collected from the positioning unit 306.

In step S702, the vehicle assistance apparatus 202 specifies a target area in which a work machine other than the vehicle assistance apparatus 202 is to perform work, based on the information collected from the sensors in step S701. Specifically, the information from the camera 312 includes information regarding an obstacle such as a tree 102 in FIG. 1, and thus the vehicle assistance apparatus 202 may specify the area 101 as a target area based on the information regarding the obstacle. The information from the inclination angle sensor 313 includes information regarding the inclination angle of ground, and thus the vehicle assistance apparatus 202 may specify the area 103 as a target area based on the information regarding the inclination angle. A configuration is adopted in which an inclination angle at which it is difficult for the ride-on lawn mower 110 to travel is determined in advance, and is set as a threshold, and when the inclination angle is larger than or equal to the threshold, a target area is specified. In addition, the information from the camera 312 includes information regarding the state of a work target such as the length of lawn grass and the state of mowed lawn, and thus the vehicle assistance apparatus 202 specifies the area 104 as a target area based on the information regarding the state of the work target. In addition, the area 105 may be specified as a target area based on information regarding the state of a work field (ground) in which the work target is present. In this manner, the information collected from the sensor in step S701 includes information regarding at least one of the obstacle, the inclination angle, the state of the work field, and the state of the work target.

In step S703, the vehicle assistance apparatus 202 determines the degree of urgency of work. Specifically, the vehicle assistance apparatus 202 references a work schedule set by the worker in advance and stored the memory 302, and, if a scheduled end-of-work time in the target area has been determined, the degree of urgency of work is determined based on the remaining period of time until this scheduled end-of-work time. A configuration may also be adopted in which the vehicle assistance apparatus 202 calculates a remaining work ratio or work area dimension out of the entire work, and if the work ratio or work area dimension is smaller than or equal to a threshold, the vehicle assistance apparatus 202 sets the degree of urgency higher. When it is not necessary to determine the degree of urgency of work, the vehicle assistance apparatus 202 may omit this step.

In step S704, the vehicle assistance apparatus 202 requests that work be performed in the target area. Specifically, prior to transmission of the request, the vehicle assistance apparatus 202 determines the geographical location of the target area, based on the information from the positioning unit 306 and the information from the camera 312. The vehicle assistance apparatus 202 then transmits the geographical location of the target area as the request, to the assistance server 201. Also, the vehicle assistance apparatus 202 adds, to this request, the information collected from the sensor in step S701. The assistance server 201 recognizes that it has been requested that work be performed in this target area, in accordance with the geographical location having been transmitted from the vehicle assistance apparatus 202. If the degree of urgency of work is determined in step S703, the vehicle assistance apparatus 202 may add the degree of urgency of work to this request.

In step S705, the assistance server 201 makes a determination on a work machine that is to perform work in the target area, based on the information collected from the sensor in step S701. Specifically, the assistance server 201 makes a determination on a work machine based on the image of the target area obtained from the camera 312 and the geographical location of the target area collected from the positioning unit 306.

The assistance server 201 may make a determination on a work machine that is to perform work in the target area, based further on the positions of work machines other than the ride-on lawn mower 110 that has made the request. The assistance server 201 periodically (for example, every minute) collects the current positions of the work machines. The assistance server 201 then makes a determination on a work machine that is closest to the target area or a work machine included in a predetermined range from the target area, as a work machine that is to perform work target. This makes the moving distance of a work machine shorter, and thus the work efficiency further improves.

The assistance server 201 may make a determination on a work machine that is to perform work in the target area, based further on the types of work machines other than the ride-on lawn mower 110 that has made the request. Types of work machines are stored in the memory 602 of the assistance server 201 by the worker in advance. For example, the assistance server 201 selects the hand-held lawn mower 120 as a work machine that is to perform work in the target area, by analyzing the image of the target area (for example, the area 101) collected from the camera 312. In another case, the assistance server 201 selects the blower 140 as a work machine that is to perform work in the target area, by analyzing the image of the target area (for example, the area 104) collected from the camera 312. Furthermore, the assistance server 201 analyzes the image of the target area collected from the camera 312, and if it is determined that there is no need for delicate work that is to be manually performed, the assistance server 201 selects the robot lawn mower 130 as a work machine that is to perform work in the target area. If it is determined that the state of the ground of the target area is a state where it is difficult for the ride-on lawn mower to travel, based on analysis of the image of the target area collected from the camera 312, or information obtained from the slip detection mechanism of the ride-on lawn mower 110, the assistance server 201 selects the hand-held lawn mower 120 as a work machine that is to perform work in the target area. Accordingly, it is possible to select only an appropriate type of work machine, and directs the selected work machine toward the target area, and thus the work efficiency further improves.

The assistance server 201 may also make a determination on a work machine that is to perform work in the target area, based further on the degree of urgency determined in step S703. For example, when the degree of urgency is high, the assistance server 201 may select the hand-held lawn mower 120, even if the robot lawn mower 130 can perform work in the target area. Accordingly, work can be performed at a pace that is based on the degree of urgency, in accordance with a determination made by the worker.

In step S706, the assistance server 201 notifies the work machine determined in step S705 of a work instruction. This work instruction includes the geographical location of the target area. In addition, if the degree of urgency of work has been determined in step S703, the work instruction may also include the degree of urgency of work. Accordingly, the worker assigned with the work machine can be aware of the degree of urgency. Furthermore, the work instruction may include the information collected from the sensor in step S701.

In step S707, the assistance apparatus (the walk assistance apparatus 203 and/or the robot assistance apparatus 204) notified of the work instruction responds to the work instruction. For example, the walk assistance apparatus 203 notifies the worker of the geographical location of the target area through the output unit 404, and prompts the worker to perform work. In addition, if the work instruction includes information from a sensor or the degree of urgency, the walk assistance apparatus 203 may also present such information. The robot assistance apparatus 204 performs route setting thereof so as to perform work in the target area.

In the above-described operation example, the target area is notified from the vehicle assistance apparatus 202 to another assistance apparatus via the assistance server 201, but the target area may be directly notified from the vehicle assistance apparatus 202 to another assistance apparatus. In this case, functions of the assistance server 201 may be incorporated in the vehicle assistance apparatus 202. In addition, at least some of the operations in steps S702 and S703 that are performed by the vehicle assistance apparatus 202 may be performed by the assistance server 201.

In the above-described operation example, based on information from a sensor related to the ride-on lawn mower 110 that is an example of a work vehicle, the vehicle assistance apparatus 202 specifies a target area in which a work machine other than the ride-on lawn mower 110 is to perform work, and requests that work be performed in this target area. Alternatively, the robot assistance apparatus 204 may specify a target area in which a work machine other than the robot lawn mower 130 is to perform work, based on information from the sensor related to the robot lawn mower 130, and requests that work be performed in this target area. Both the ride-on lawn mower 110 and the robot lawn mower 130 are examples of a travelling work machine.

Various changes and modifications can be made within the scope of the present invention as defined by the appended claims.

### REFERENCE SIGNS LIST

- 200: Assistance system
- 201: Assistance server
- 202: Vehicle assistance apparatus
- 203: Walk assistance apparatus
- 204: Robot assistance apparatus

## Claims

1. An assistance apparatus for assisting work that is performed in a work area (100) set in advance using a plurality of work machines (110, 120, 130, 140) that include a travelling work machine (110, 130), the apparatus **characterized by** comprising:
specifying means for specifying an area as a target area (101, 103, 104, 105) included in the work area (100) in which a work machine other than the travelling work machine (110, 130) is to perform work, based on information from a sensor related to the travelling work machine (110, 130), the information including an inclination angle of the area measured by an inclination angle sensor (313) and information from a camera (312) comprised in the travelling work machine (110, 130), when the inclination angle is larger than or equal to a threshold set in advance at which it is difficult for the travelling work machine (110, 130) to travel; and
requesting means for requesting to perform work in the target area. area (101, 103, 104, 105).

2. The assistance apparatus according to claim 1, **characterized in that**
a work machine that is to perform work in the target area (101, 103, 104, 105) is determined based further on a position of a work machine other than the travelling work machine (110, 130).

3. The assistance apparatus according to claim 1 or 2, **characterized in that**
a work machine that is to perform work in the target area (101, 103, 104, 105) is determined based further on a type of a work machine other than the travelling work machine (110, 130).

4. The assistance apparatus according to any one of claims 1 to 3, **characterized in that**
the information from the sensor includes information regarding an obstacle (102).

5. The assistance apparatus according to any one of claims 1 to 4, **characterized in that**
a work instruction that is notified to the work machine that is to perform work in the target area (101, 103, 104, 105) includes a degree of urgency of work.

6. The assistance apparatus according to any one of claims 1 to 5, **characterized in that**
a work machine that is to perform work in the target area (101, 103, 104, 105) is determined based further on a degree of urgency of work that is to be performed in the target area (101, 103, 104, 105).

7. An assistance method for assisting work that is performed in a work area (100) set in advance using a plurality of work machines (110, 120, 130, 140) that include a travelling work machine (110, 130), the method **characterized by** comprising:
specifying an area as a target area (101, 103, 104, 105) included in the work area (100) in which a work machine other than the travelling work machine (110, 130) is to perform work, based on information from a sensor related to the travelling work machine (110, 130), the information including an inclination angle of the area measured by an inclination angle sensor (313) and information from a camera (312) comprised in the travelling work machine (110, 130), when the inclination angle is larger than or equal to a threshold set in advance at which it is difficult for the travelling work machine (110, 130) to travel; and
requesting to perform work in the target area (101, 103, 104, 105).

8. A computer program for causing a computer to function as each means of the assistance apparatus according to any one of claims 1 to 6.

## Patentansprüche

1. Eine Assistenzvorrichtung zum Unterstützen bei in einem zuvor festgelegten Arbeitsbereich (100) auszuführenden Arbeiten, unter Verwendung einer Mehrzahl an Arbeitsmaschinen (110, 120, 130, 140) einschließlich einer fahrenden Arbeitsmaschine (110, 130), wobei die Vorrichtung **dadurch gekennzeichnet ist, dass** sie aufweist:
Spezifizierungsmittel zum Spezifizieren eines in dem Arbeitsbereich (100) enthaltenen Bereichs als Zielbereich (101, 103, 104, 105), in dem eine andere Arbeitsmaschine als die fahrende Arbeitsmaschine (110, 130) Arbeiten durchführen soll, auf der Grundlage sich auf die fahrende Arbeitsmaschine (110, 130) beziehender Sensor-Information, wobei diese Information einen von einem Neigungswinkelsensor (313) gemessenen Neigungswinkel des Bereichs sowie Informationen von einer in der fahrenden Arbeitsmaschine (110, 130) integrierten Kamera (312) beinhaltet, wenn der Neigungswinkel größer oder gleich einem zuvor festgelegten Schwellenwert ist, bei dem das Fahren der fahrenden Arbeitsmaschine (110, 130) schwierig ist; und
Anforderungsmittel zum Anfordern der Durchführung von Arbeiten in dem Zielbereich (101, 103, 104, 105).

2. Die Assistenzvorrichtung nach Anspruch 1, **dadurch gekennzeichnet, dass**
eine Arbeitsmaschine, die eine Arbeit in dem Zielbereich (101, 103, 104, 105) ausführen soll, ferner auf der Grundlage der Position einer anderen Arbeitsmaschine als der fahrenden Arbeitsmaschine (110, 130) bestimmt wird.

3. Die Assistenzvorrichtung nach Anspruch 1 oder 2, **dadurch gekennzeichnet, dass**
eine Arbeitsmaschine, die eine Arbeit in dem Zielbereich (101, 103, 104, 105) ausführen soll, ferner auf der Grundlage des Typs einer anderen Arbeitsmaschine als der fahrenden Arbeitsmaschine (110, 130) bestimmt wird.

4. Die Assistenzvorrichtung nach einem der Ansprüche 1 bis 3, **dadurch gekennzeichnet, dass** die Sensor-Information Information über ein Hindernis (102) enthält.

5. Die Assistenzvorrichtung nach einem der Ansprüche 1 bis 4, **dadurch gekennzeichnet, dass**
eine Arbeitsanweisung, die der Arbeitsmaschine, welche eine Arbeit im Zielbereich (101, 103, 104, 105) ausführen soll, mitgeteilt wird, einen Dringlichkeitsgrad der Arbeit enthält.

6. Die Assistenzvorrichtung nach einem der Ansprüche 1 bis 5, **dadurch gekennzeichnet, dass**
eine Arbeitsmaschine, die eine Arbeit in dem Zielbereich (101, 103, 104, 105) ausführen soll, ferner auf der Grundlage des Dringlichkeitsgrades der in dem Zielbereich (101, 103, 104, 105) auszuführenden Arbeit bestimmt wird.

7. Ein Assistenzverfahren zum Unterstützen bei in einem zuvor festgelegten Arbeitsbereich (100) auszuführenden Arbeiten, unter Verwendung einer Mehrzahl an Arbeitsmaschinen (110, 120, 130, 140), einschließlich einer fahrenden Arbeitsmaschine (110, 130), wobei das Verfahren **dadurch gekennzeichnet ist, dass** es folgende Schritte aufweist:
Spezifizieren eines in dem Arbeitsbereich (100) enthaltenen Bereichs als Zielbereich (101, 103, 104, 105), in dem eine andere Arbeitsmaschine als die fahrende Arbeitsmaschine (110, 130) Arbeiten durchführen soll, auf der Grundlage sich auf die fahrende Arbeitsmaschine (110, 130) beziehender Sensor-Information, wobei diese Information einen von einem Neigungswinkelsensor (313) gemessenen Neigungswinkel des Bereichs sowie Information von einer in der fahrenden Arbeitsmaschine (110, 130) integrierten Kamera (312) beinhaltet, wenn der Neigungswinkel größer oder gleich einem zuvor festgelegten Schwellenwert ist, bei dem das Fahren der fahrenden Arbeitsmaschine (110, 130) schwierig ist; und
Anfordern der Durchführung von Arbeiten in dem Zielbereich (101, 103, 104, 105).

8. Ein Computerprogramm, welches einen Computer veranlasst, als jedes Mittel der Assistenzvorrichtung nach einem der Ansprüche 1 bis 6 zu fungieren.

## Revendications

1. Appareil d'aide pour aider un travail qui est réalisé dans une zone de travail (100) définie à l'avance en utilisant une pluralité de machines de travail (110, 120, 130, 140) comportant une machine de travail mobile (110, 130), l'appareil étant **caractérisé en ce qu'**il comprend :
des moyens de spécification pour spécifier une zone en tant qu'une zone cible (101, 103, 104, 105) comprise dans la zone de travail (100) dans laquelle une machine de travail autre que la machine de travail mobile (110, 130) doit réaliser un travail, sur la base d'informations émanant d'un capteur lié à la machine de travail mobile (110, 130), les informations comportant un angle d'inclinaison de la zone mesuré par un capteur d'angle d'inclinaison (313) et des informations émanant d'une caméra (312) comprise dans la machine de travail mobile (110, 130), lorsque l'angle d'inclinaison est supérieur ou égal à un seuil défini à l'avance auquel il est difficile pour la machine de travail mobile (110, 130) de se déplacer ; et
des moyens de demande pour demander de réaliser un travail dans la zone cible (101, 103, 104, 105).

2. Appareil d'aide selon la revendication 1, **caractérisé en ce que**
une machine de travail qui doit réaliser un travail dans la zone cible (101, 103, 104, 105) est déterminée sur la base en outre d'une position d'une machine de travail autre que la machine de travail mobile (110, 130).

3. Appareil d'aide selon la revendication 1 ou 2, **caractérisé en ce que**
une machine de travail qui doit réaliser un travail dans la zone cible (101, 103, 104, 105) est déterminée sur la base en outre d'un type d'une machine de travail autre que la machine de travail mobile (110, 130).

4. Appareil d'aide selon l'une quelconque des revendications 1 à 3, **caractérisé en ce que** les informations émanant du capteur comportent des informations relatives à un obstacle (102).

5. Appareil d'aide selon l'une quelconque des revendications 1 à 4, **caractérisé en ce que** une instruction de travail qui est notifiée à la machine de travail qui doit réaliser un travail dans la zone cible (101, 103, 104, 105) comporte un degré d'urgence du travail.

6. Appareil d'aide selon l'une quelconque des revendications 1 à 5, **caractérisé en ce que**
une machine de travail qui doit réaliser un travail dans la zone cible (101, 103, 104, 105) est déterminée sur la base en outre d'un degré d'urgence du travail qui doit être réalisé dans la zone cible (101, 103, 104, 105).

7. Procédé d'aide pour aider un travail qui est réalisé dans une zone de travail (100) définie à l'avance en utilisant une pluralité de machines de travail (110, 120, 130, 140) comportant une machine de travail mobile (110, 130), le procédé étant **caractérisé en ce qu'**il comprend :
la spécification d'une zone en tant qu'une zone cible (101, 103, 104, 105) comprise dans la zone de travail (100) dans laquelle une machine de travail autre que la machine de travail mobile (110, 130) doit réaliser un travail, sur la base d'informations émanant d'un capteur lié à la machine de travail mobile (110, 130), les informations comportant un angle d'inclinaison de la zone mesuré par un capteur d'angle d'inclinaison (313) et des informations émanant d'une caméra (312) comprise dans la machine de travail mobile (110, 130), lorsque l'angle d'inclinaison est supérieur ou égal à un seuil défini à l'avance auquel il est difficile pour la machine de travail mobile (110, 130) de se déplacer ; et
la demande de réaliser un travail dans la zone cible (101, 103, 104, 105).

8. Programme informatique pour amener un ordinateur à fonctionner en tant que chaque moyen de l'appareil d'aide selon l'une quelconque des revendications 1 à 6.
